# EUROPÄISCHE PATENTSCHRIFT

(11) **EP 1 443 636 B1**
(45) Veröffentlichungstag und Bekanntmachung des Hinweises auf die Patenterteilung: **14.06.2006**
(21) Anmeldenummer: 03002211.5
(22) Anmeldetag: 31.01.2003
(51) Int. Cl.: H02P 6/00, H02K 29/14, G01P 3/44

(54) **Verfahren zur Bestimmung der Drehzahl eines Motors**
Method for detecting the angular speed of a motor
Méthode pour détecter la vitesse angulaire d'un moteur

(43) Veröffentlichungstag der Anmeldung: 04.08.2004
(73) Patentinhaber: Siemens Schweiz AG, 8047 Zürich (CH)
(72) Erfinder: Meier, Alexander, 77830 Bühlertal (DE)
(74) Vertreter: Weise, Wolfgang

(56) Entgegenhaltungen:
- US-A- 4 479 115
- US-A- 5 953 490

## Beschreibung

Die Erfindung betrifft gemäss dem Oberbegriff des Anspruchs 1 ein Verfahren zur Bestimmung der Drehzahl eines Motors, bei dem das von einem rotierenden Motor abgegebene Geräusch als Mass für die Drehzahl verwendet wird. Ferner betrifft die Erfindung auch eine Vorrichtung zur Durchführung des erfindungsgemässen Verfahrens.

Ein Verfahren der eingangs genannten Art ist beispielsweise aus der Druckschrift US 5,953,490 bekannt. Die Figur 8A und 8B dieser Druckschrift zeigen in einer schematischen Darstellung einen Motor 601 und ein auf dem Motor angeordnetes Mikrofon 176, das beispielsweise mittels eines Klebers auf dem Motorgehäuse befestigt ist. Bei rotierendem Motor erzeugen die Vibrationen in den Wicklungen des Motors ein Geräusch, im vorliegenden Fall ein Brummen, welches ein Mass für die Drehzahl des Motors darstellt. Das von dem Mikrofon detektierte Brummen wird in ein PWM-Signal umgewandelt, wobei die Pulsweite in Abhängigkeit von der jeweiligen Motorgeschwindigkeit variiert und dieser Zusammenhang zur Bestimmung der Drehzahl entsprechend ausgewertet wird.

Obwohl das bekannte Verfahren ohne zusätzliche Anbauteile eine Bestimmung der Drehzahl ermöglicht, lässt es jedoch hinsichtlich der Genauigkeit zu wünschen übrig, da das durch die Vibrationen der Windungen verursachte Brummgeräusch einer starken Streuung unterliegt, wodurch die Zuverlässigkeit des Verfahrens beeinträchtigt wird. Weiterhin kann mit dem bekannten Verfahren auch nur die Drehzahl jedoch nicht die Drehrichtung des Motors festgestelllt werden.

Der Erfindung liegt somit die Aufgabe zugrunde, ein Verfahren der eingangs genannten Art vorzuschlagen, welches unter Vermeidung der genannten Nachteile des Standes der Technik, in einfacher Art und Weise eine genaue und zuverlässige Drehzahlbestimmung ermöglicht.

Diese Aufgabe wird durch die im kennzeichnenden Teil des Anspruchs 1 angegebenen Merkmale gelöst.

Mit anderen Worten nutzt die Erfindung die Tatsache, dass ein sich mit dem Motor drehendes Teil, z. B. ein zur Kühlung des Motors auf der Motorwelle angeordnetes Lüfterrad bei rotierendem Motor Schallwellen bewirkt, die von wenigstens einem in der Nähe des rotierenden Teils des Motors befindlichen Mikrofon erfasst werden können. Die hierbei detektierte Frequenz ist dabei proportional zur Drehzahl des Motors, so dass anhand der detektierten Frequenz der Schallwellen die Motordrehzahl genau bestimmt werden kann. Vorzugsweise wird die Motordrehzahl anhand der Frequenz und der Anzahl der Lüfterschaufeln des Lüfterrades ermittelt.

Selbstverständlich kann anstelle des Lüfterrades auch ein anderes geeignetes drehendes Teil, z. B. ein mit Nuten versehener Motoranker oder eine auf der Motorwelle angeordnete Lochscheibe, das in einer bekannten Beziehung zu dem rotierenden Motor steht und ein detektierbares Geräusch bewirkt zur Bestimmung der Motordrehzahl verwendet werden.

Bei einer geringen Drehzahl des Motors können die von dem rotierenden Teil stammenden Geräusche jedoch sehr leise und auch durch Fremdgeräusche bzw. Umgebungsgeräusche in unerwünschter Weise überlagert werden, wodurch die Genauigkeit beeinträchtigt wird.
Um dies zu vermeiden, wird gemäss einer Weiterbildung der Erfindung vorgeschlagen, zwei dicht zueinander positionierte Mikrofone vorzusehen, die beispielsweise am Abdeckgitter des Lüfters befestigt sind. Dadurch werden aus dem von dem drehenden Teil des Motors erzeugten Geräusch dann mittels der beiden Mikrofone zwei phasenverschobene Signale erhalten, wohingegen die Umgebungs- bzw. Fremdgeräusche jedoch phasengleiche Signale erzeugen. Dies gilt dann, wenn bei der Positionierung der Abstand der Mikrofone zueinander kleiner als die Wellenlänge der zu erfassenden Frequenzen gewählt wird. Werden die von den beiden Mikrofonen erhaltenen phasenverschobenen Signale subtrahiert, so löschen sich dabei die von den Fremdgeräuschen herrührenden Störsignale aus und es bleibt nur das Nutzsignal übrig. Dieses wird dann zur Bestimmung der Drehzahl verwendet. Weiterhin hat die Verwendung von zwei Mikrofonen jedoch auch den Vorteil, dass z. B. aus der Richtung der Phasenverschiebung der Mikrofonsignale auch die Drehrichtung des Motors bestimmt werden kann.

Bei der Verwendung von günstigen Mikrofonen, zum Beispiel in Form von Elektretmikrofonen kann jedoch auch ein weiteres Problem darin bestehen, dass diese in ihrer Empfindlichkeit eine nicht zu vernachlässigende Streuung aufweisen können. Dadurch könnten jedoch die von den Fremdgeräuschen herrührenden Störsignale bei der Subtraktion nicht mehr vollständig eliminiert werden. Dies hätte jedoch zur Folge, dass die Empfindlichkeit der Mikrofone immer genau gleich sein müsste, was in der Praxis jedoch nicht immer gewährleistet ist.

Unabhängig davon kann aber auch die Empfindlichkeit der Mikrofone aufgrund der Umgebungsbedingungen schwanken, so dass sich dadurch bedingte Unterschiede in den Signalen nicht durch eine einmalige Kalibrierung vollständig eliminieren lassen.

Um dieses Problem zu lösen wird gemäss einer Weiterbildung der Erfindung, eine Amplituden- bzw. Signalpegelregelung vorgeschlagen, welche die von den Mikrofonen erhaltenen Signale auf einem konstanten gleichen Pegel hält, bevor die Signale voneinander subtrahiert werden. Eine solche Amplitudenregelung hat auch den Vorteil, dass die Schaltung zur Auswertung des Nutzsignals optimal ausgesteuert werden kann. Hierzu können beispielsweise preisgünstige Bauteile in Form von Operationsverstärkern verwendet werden.

Weitere Vorteile der Erfindung ergeben sich anhand der nachfolgenden Beschreibung und sind Gegenstand der Ansprüche.
Figur 1 zeigt in einer schematisierten Darstellung ein bevorzugtes Ausführungsbeispiel der Erfingung mit einem Lüfterrad und zwei Mikrofonen, die zur Bestimmung der Drehzahl eines Motors verwendet werden.
Figur 2 zeigt in einem vereinfachten Blockschaltbild ein bevorzugtes Ausführungsbeispiel einer Schaltungsanordnung zur Durchführung des erfindungsgemässen Verfahrens.
Figur 3 zeigt in einem Diagramm beispielhaft die Signalverläufe bei dem erfindungsgemässen Verfahren.

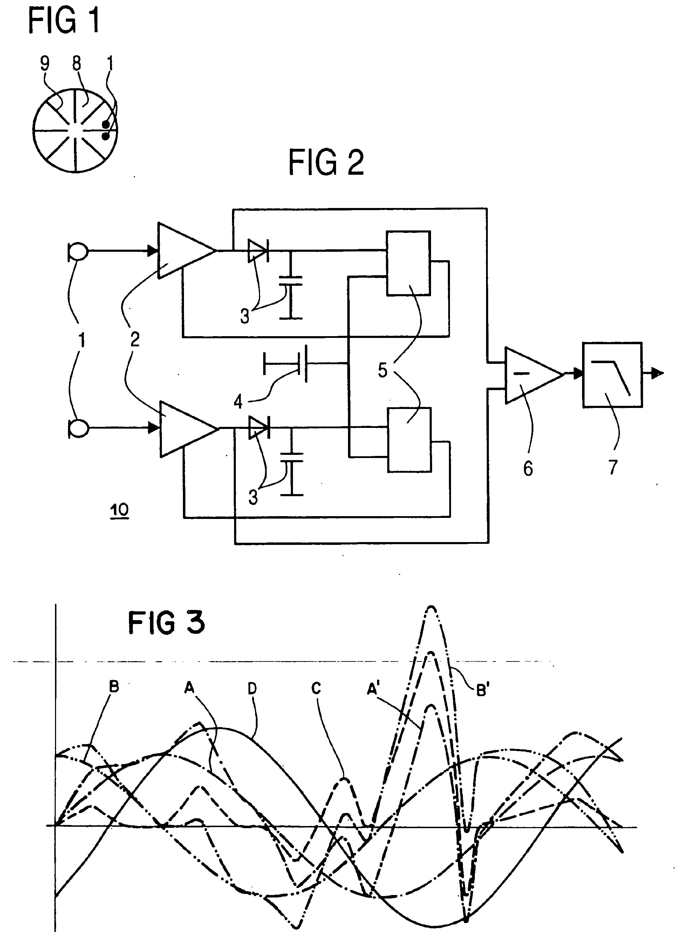

Figur 1 zeigt beispielsweise ein Lüfterrad 8, welches zur Kühlung eines hier nicht näher dargestellten Motors vorgesehen ist. Das Lüfterrad 8 ist in der Regel auf der Motorwelle des Motors angeordnet und weist mehrere Lüfterschaufeln 9, im vorliegenden Fall acht Lüfterschaufeln zur Kühlung des Motors auf. Bei rotierendem Motor erzeugt das Lüfterrad Schallwellen, wobei die Frequenz der erfassten Schallwellen proportional zur Drehzahl ist. Die bei drehendem Motor von dem Lüfterrad erzeugten Schallwellen werden erfindungsgemäss von wengistens einem vorzugsweise von zwei in der Nähe des Lüfterrades angeordneten Mikrofonen 1 erfasst, wobei aus der detektierten Frequenz und der bekannten Anzahl der Lüfterschaufeln die Motordrehzahl bestimmt werden kann. Beispielsweise ergibt sich die Motordrehzahl bei einer detektierten Frequenz von 400 Hz und bei acht Lüfterschaufeln zu 3000 Umdrehungen/Minute. Vorzugsweise werden die Mikrofone an einem hier nicht dargestellten Abdeckgitter des Lüfterrades 8 befestigt. Somit kann die Drehzahl des Motors gemäss der Erfindung ohne zusätzliche Anbauteile in einfacher Art und Weise genau bestimmt werden.

Figur 2 zeigt ein Ausführungsbeispiel der Erfindung mit zwei Mikrofonen 1, die wie in Figur 1 dargestellt, dicht nebeneinander positioniert sind. Der Abstand der Mikrofone sollte, damit eine wirksame Unterdrückung von Fremdgeräuschen bzw. Umgebungsgeräuschen gewährleistet ist, so nahe wie möglich auf jeden Fall kleiner als die Wellenlänge der zu detektierenden Frequenzen gewählt werden. Die von den beiden Mikrofonen 1 erhaltenen Signale werden einer Schaltung 10 zugeführt. Die Ausgangssignale der Mikrofone werden von der Schaltung 10 zweikanalig weiterverarbeitet und z. B. den Verstärkern 2 und den Gleichrichtern 3, zugeführt. Die verstärkten und gleichgerichteten Signale werden dann den Reglern 5 zugeführt und mit einem Referenzsignal 4 verglichen, welches für beide Regler gleich ist, wobei die Stellgrösse des Reglers 5 hierbei den entsprechenden Verstärker 2 steuert. Dadurch erhält man zwei Signale mit gleicher Amplitude. Diese Signale werden dann von einem Subtrahierer 6 voneinander subtrahiert, wodurch die gleichphasigen Fremdgeräusche eliminiert und nur das von dem Lüfterrad stammende Geräusch als Nutzsignal für die Bestimmung der Drehzahl erhalten wird. Gleichphasige Störsignale, die beispielsweise von Fremdgeräuschen herrühren, werden somit durch die erfindungsgemässe Schaltungsanordnung eliminiert. Da die Gleichphasigkeit der Störsignale im wesentlichen nur dann gegeben ist, wenn die Wellenlänge der Störsignale größer als der Abstand der Mikrofone 1 zueinander ist, wird das von dem Subtrahierer erhaltene Nutzsignal durch einen nachgeschalteten Tiefpass 7 in der Bandbreite begrenzt, wobei Störungen mit hoher Frequenz bzw. kleiner Wellenlänge durch den Tiefpass 7 wirksam unterdrückt werden.

Figur 3 zeigt die z.B. durch die erfindungsgemässe Schaltungsanordnung gemäss Fig. 2 erhaltenen Signalverläufe, die in einem Diagramm dargestellt sind. Die von den Mikrofonen 1 erhaltenen Signale A und B sind aufgrund der räumlich versetzten Anordnung der Mikrofone 1 zueinander phasenverschoben. Die Signale A und B weisen jedoch die gleiche Amplitude bzw. den gleichen Signalpegel auf. Das Signal C stellt z. B. ein stochastisches Störsignal dar, das beispielsweise dem Signal A und B überlagert ist, wie dies in den gestörten Signalverläufen A' und B' gezeigt ist. Das aus der Subtraktion der Signalverläufe A' und B' erhaltene Nutzsignal D wird dann zur Bestimmung der Drehzahl des Motors verwendet. Darüberhinaus ermöglicht das erfindungsgemässe Verfahren auch eine Ermittlung der Drehrichtung des Motors, die in einfacher Art und Weise aus der Richtung der Phasenverschiebung bestimmt werden kann.
Beispielsweise kann die Drehrichtung aus der Phasenverschiebung der verstärkten oder unverstärkten Mikrofonsignale beziehungsweise aus der Phasenverschiebung des aus der Subtraktion erhaltenes Nutzsignals bezogen auf eines der beiden der Mikrofonsignale ermittelt werden.

## Patentansprüche

1. Verfahren zur Bestimmung der Drehzahl eines Motors, bei dem das von einem rotierenden Motor abgegebene Geräusch als Mass für die Drehzahl verwendet wird, wobei die von einem drehenden Teil des rotierenden Motors erzeugten Schallwellen von wenigstens einem Mikrofon erfasst und das anhand der Frequenz der detektierten Schallwellen die Motordrehzahl bestimmt wird, **dadurch gekennzeichnet, dass** ein weiteres Mikrofon zur Erfassung der erzeugten Schallwellen vorgesehen ist, wobei das von dem zweiten Mikrofon erhaltene Signal in Bezug auf das vom ersten Mikrofon erhaltene Signal phasenverschoben zu diesem ist und dass die beiden zueinander phasenverschobenen Mikrofonsignale voneinander subtrahiert werden, wobei das aus der Subtraktion erhaltene Nutzsignal zur Bestimmung der Drehzahl des Motors verwendet wird.

2. Verfahren nach Anspruch 1, **dadurch gekennzeichnet, dass** die Motordrehzahl anhand der detektierten Frequenz der von einem Lüfterrad des Motors erzeugten Schallwellen und der Anzahl der Lüfterschaufeln des Lüfterrades ermittelt wird.

3. Verfahren nach Anspruch 1 oder 2, **dadurch gekennzeichnet, dass** die von den Mikrofonen erhaltenen Signale verstärkt und/oder in der Bandbreite begrenzt werden, bevor diese voneinander subtrahiert werden.

4. Verfahren nach Anspruch 1 oder 3, **dadurch gekennzeichnet, dass** die Signale der Mikrofone auf gleichen Pegel gebracht werden und diese Signale voneinander subtrahiert werden.

5. Verfahren nach Anspruch 1 oder 2, **dadurch gekennzeichnet, dass** aus der Richtung der Phasenverschiebung die Drehrichtung des Motors bestimmt wird.

6. Verfahren anch Anspruch 5, **dadurch gekennzeichnet, dass** die Drehrichtung aus der Phasenverschiebung der verstärkten oder unverstärkten Mikrofonsignale ermittelt wird.

7. Verfahren nach Anspruch 5, **dadurch gekennzeichnet, dass** die Drehrichtung aus der Phasenverschiebung des aus der Subtraktion erhaltenen Nutzsignals bezogen auf eines der beiden Mikrofonsignale ermittelt wird.

8. Vorrichtung zur Durchführung des Verfahrens nach Anspruch 1, welche die von einem rotierenden Teil (8) eines Motors erzeugten Schallwellen mittels wenigstens einem in der Nähe des rotierenden Teils (8) des Motors angeordneten Mikrofones (1) erfasst und dass anhand der Frequenz der detektierten Schallwellen die Bestimmung der Drehzahl des Motors erfolgt, **dadurch gekennzeichnet, dass** ein zweites Mikrofon (1) zur Erfassung der von dem rotierenden Teil (8) erzeugten Schallwellen in einem Abstand der kleiner der Wellenlänge der zur detektierenden Frequenz der Schallwellen ist zu dem ersten Mikrofon (1) angeordnet ist, wodurch die von den beiden Mikrofonen (1) erhaltenen Signale phasenverschoben zueinander sind und dass diese phasenverschobenen Signale mittels eines Subtrahierers (6) voneinander subtrahiert werden..

9. Vorrichtung nach Anspruch 8, **dadurch gekennzeichnet, dass** das rotierende Teil (8) des Motors ein zur Kühlung des Motors vorgesehenes Lüfterrad (8) mit Lüfterschaufeln (9) ist.

10. Vorrichtung nach Anspruch 8, **dadurch gekennzeichnet, dass** Verstärker (2) zur Verstärkung der von den Mikrofonen (1) erhaltenen Signale und/oder Gleichrichter (3) zur Gleichrichtung der Mikrofonsignale vorgesehen sind, wobei die verstärkten und/oder gleichgerichteten Mikrofonsignale voneinander subtrahiert werden.

11. Vorrichtung nach Anspruch 10, **dadurch gekennzeichnet, dass** die verstärkten und/oder gleichgerichteten Mikrofonsignale Reglern (5) zugeführt werden und mit einem Referenzsignal (4) verglichen werden, dass für beide Regler (5) gleich ist, wobei die Regler (5) die Verstärker (2) derart steuern, dass die Mikrofonsignale den gleichen Signalpegel aufweisen und diese Signale mittels des Subtrahierers (6) voneinander subtrahiert werden.

12. Vorrichtung nach Anspruch 8, **dadurch gekennzeichnet, dass** das von dem Subtrahierer (6) erhaltene Signal durch einen nachgeschalteten Filter (7) in der Bandbreite begrenzt wird.

## Claims

1. Method for determining the rotation speed of a motor, in which the noise output by a rotating motor is used as a measure for the rotation speed, the soundwaves produced by a rotating part of the rotating motor being sensed by at least one microphone, and the motor rotation speed being determined using the frequency of the detected soundwaves, **characterized in that** a further microwave is provided for the purpose of sensing the produced soundwaves, the signal obtained from the second microphone being phase-shifted with respect to the signal obtained from the first microphone, and **in that** the two microphone signals, which are phase-shifted with respect to one another, are subtracted from one another, the useful signal obtained from the subtraction being used to determine the rotation speed of the motor.

2. Method according to Claim 1, **characterized in that** the motor rotation speed is determined using the detected frequency of the soundwaves produced by a fan impeller of the motor, and the number of fan blades of the fan impeller is determined.

3. Method according to Claim 1 or 2, **characterized in that** the signals obtained from the microphones are amplified and/or limited in terms of the bandwidth before they are subtracted from one another.

4. Method according to Claim 1 or 3, **characterized in that** the signals from the microphones are brought to the same level, and these signals are subtracted from one another.

5. Method according to Claim 1 or 2, **characterized in that** the rotation direction of the motor is determined from the direction of the phase shift.

6. Method according to Claim 5, **characterized in that** the rotation direction is determined from the phase shift of the amplified or unamplified microphone signals.

7. Method according to Claim 5, **characterized in that** the rotation direction is determined from the phase shift of the useful signal obtained from the subtraction in relation to one of the two microphone signals.

8. Apparatus for carrying out the method according to Claim 1, which senses the soundwaves produced by a rotating part (8) of a motor by means of at least one microphone (1), which is arranged in the vicinity of the rotating part (8) of the motor, and in that the rotation speed of the motor is determined using the frequency of the detected soundwaves, **characterized in that** a second microphone (1) for the purpose of sensing the soundwaves produced by the rotating part (8) is arranged at a distance from the first microphone (1) which is less than the wavelength of the frequency to be detected of the soundwaves, as a result of which the signals obtained from the two microphones (1) are phase-shifted with respect to one another, and **in that** these phase-shifted signals are subtracted from one another by means of a subtractor (6).

9. Apparatus according to Claim 8, **characterized in that** the rotating part (8) of the motor is a fan impeller (8) having fan blades (9), which is provided for the purpose of cooling the motor.

10. Apparatus according to Claim 8, **characterized in that** amplifiers (2) are provided for the purpose of amplifying the signals obtained from the microphones (1), and/or rectifiers (3) are provided for the purpose of rectifying the microphone signals, the amplified and/or rectified microphone signals being subtracted from one another.

11. Apparatus according to Claim 10, **characterized in that** the amplified and/or rectified microphone signals are fed to regulators (5) and are compared with a reference signal (4) which is the same for both regulators (5), the regulators (5) controlling the amplifiers (2) such that the microphone signals have the same signal level and these signals are subtracted from one another by means of the subtractor (6).

12. Apparatus according to Claim 8, **characterized in that** the signal obtained from the subtractor (6) is limited in terms of the bandwidth by a downstream filter (7).

## Revendications

1. Méthode pour détecter la vitesse de rotation d'un moteur, dans laquelle le bruit émis par un moteur rotatif est utilisé comme mesure pour la vitesse, les ondes sonores produites par une pièce tournante du moteur rotatif étant détectées par au moins un microphone, et la vitesse de rotation du moteur étant déterminée à l'aide de la fréquence des ondes sonores détectées, **caractérisée en ce qu'**un autre microphone est prévu pour détecter les ondes sonores générées, le signal obtenu par le deuxième microphone étant déphasé par rapport au signal obtenu par le premier microphone, et **en ce que** les deux signaux de microphone déphasés l'un par rapport à l'autre sont soustraits l'un de l'autre, le signal utile obtenu par la soustraction étant utilisé pour déterminer la vitesse de rotation d'un moteur.

2. Méthode selon la revendication 1, **caractérisée en ce que** la vitesse de rotation du moteur est déterminée à l'aide de la fréquence détectée des ondes sonores générées par une roue de ventilateur du moteur et du nombre d'ailettes de ventilateur de la roue de ventialeur.

3. Méthode selon la revendication 1 ou 2, **caractérisée en ce que** les signaux obtenus par les microphones sont amplifiés et/ou limités dans leur largeur de bande, avant qu'ils ne soient soustraits l'un de l'autre.

4. Méthode selon la revendication 1 ou 3, **caractérisée en ce que** les signaux des microphones sont mis au même niveau et que ces signaux sont soustraits l'un de l'autre.

5. Méthode selon la revendication 1 ou 2, **caractérisée en ce que** le sens de rotation du moteur est déterminé par la direction du déphasage.

6. Méthode selon la revendication 5, **caractérisée en ce que** le sens de rotation est déterminé à partir du déphasage des signaux de microphone amplifiés ou non amplifiés.

7. Méthode selon la revendication 5, **caractérisée en ce que** le sens de rotation est déterminé à partir du déphasage du signal utile obtenu par la soustraction, par rapport à l'un des deux signaux de microphone.

8. Dispositif pour réaliser la méthode selon la revendication 1, lequel détecte les ondes sonores générées par une pièce tournante (8) d'un moteur au moyen d'au moins un microphone (1) disposé à proximité de la pièce tournante (8) du moteur, la détermination de la vitesse du moteur étant effectuée à l'aide de la fréquence des ondes sonores détectées, **caractérisé en ce qu'**un deuxième microphone (1) pour détecter les ondes sonores générées par la pièce tournante (8) est placé à une distance plus petite que la longueur d'onde de la fréquence à détecter des ondes sonores, par rapport au premier microphone (1), sur quoi les signaux obtenus par les deux microphones (1) sont déphasés l'un par rapport à l'autre et ces signaux déphasés étant soustraits l'un de l'autre au moyen d'un soustracteur (6).

9. Dispositif selon la revendication 8, **caractérisé en ce que** la pièce tournante (8) du moteur est une roue de ventilateur (8) dotée d'ailettes de ventilateur, prévue pour le refroidissement du moteur.

10. Dispositif selon la revendication 8, **caractérisé en ce que** l'on prévoit des amplificateurs (2) pour amplifier les signaux obtenus par les microphones (1) et/ou des redresseurs (3) pour redresser les signaux de microphone, les signaux de microphone amplifiés et/ou redressés étant soustraits l'un de l'autre.

11. Dispositif selon la revendication 10, **caractérisé en ce que** les signaux de microphone amplifiés et/ou redressés sont amenés à des régulateurs (5) et sont comparés à un signal de référence (4) identique pour les deux régulateurs (5), les régulateurs (5) commandant les amplificateurs (2) de telle sorte que les signaux de microphone présentent le même niveau de signal et que ces signaux sont soustraits l'un de l'autre au moyen du soustracteur (6).

12. Dispositif selon la revendication 8, **caractérisé en ce que** le signal obtenu par le soustracteur (6) est limité dans la largeur de bande par un filtre (7) placé en aval.
